# EUROPEAN PATENT SPECIFICATION

(11) **EP 1 144 898 B1**
(45) Date of publication and mention of the grant of the patent: **15.06.2005**
(21) Application number: 99917064.0
(22) Date of filing: 28.04.1999
(51) Int. Cl.: F16L 11/08

(54) **COUPLING PIPE FOR WATER HEATING AND/OR CONDITIONING SYSTEMS AND MAKING METHOD THEREOF**
VERBINDUNGSROHR FÜR HEIZWASSER- UND /ODER KLIMASYSTEME UND VERFAHREN ZUR HERSTELLUNG
TUYAU DE RACCORDEMENT POUR SYSTEME CHAUFFE-EAU ET/OU ADOUCISSEUR D'EAU, ET SON PROCEDE DE FABRICATION

(30) Priority: 22.01.1999 IT MI990123
(43) Date of publication of application: 17.10.2001
(73) Proprietor: Stickleton Trading Limited, Dublin 2 (IE)
(72) Inventor: PRESSI, Angelo, I-20050 Sulbiate (IT)
(74) Representative: Cicogna, Franco
(86) International application number: PCT/IT1999/000108
(87) International publication number: WO 2000/043705

(56) References cited:
- EP-A- 0 203 880
- US-A- 4 091 843
- US-A- 4 330 017
- US-A- 4 488 577
- US-A- 4 633 912

## Description

### BACKGROUND OF THE INVENTION

The present invention relates to a coupling pipe for water heating and/or conditioning systems.

The invention further relates to a method for making this pipe.

As is known, main requirements for components to be used in heating systems, according to the most recent technical standards, provide that the mentioned components have sealing properties with respect to oxygen, thereby preventing the heating system from being undesirably oxidated.

Moreover is also known that the pipe used in the above mentioned applications must have very good strength and flexibility characteristics.

In this connection it should be pointed out that at present no rubber pipe having the above properties and a good quality/cost ratio is available.

The document US-A-4 633 912 discloses a hose comprising: (1) a polyamide core; (2) an elastomeric friction layer comprising (a) a base polymer selected from EPDM's, copolymers of butadiene, polychloroprene, polybutadiene, polyisoprene or mixtures thereof, (b) a calcium ion source selected from the group comprising calcium stearate, calcium alkoxides of 1 to 10 carbon atoms, calcium hydroxide, calcium oxide and calcium carbonate, (c) a resorcinol or phenolic based adhesive system, and (d) a peroxide or sulfur curative; applied to the outer surface of the core and adhered directly thereto after curing; (3) a first layer of reinforcement strands tensioned about elastomeric friction layer; (4) an adhesive/barrier/friction layer comprising a compound selected from natural and synthetic elastomers and copolymers of ethylene and acrylic acid; (5) a second layer of reinforcement strands tensioned about the adhesive/barrier/friction layer; and (6) a halobutyl rubber cover wherein the halobutyl rubber contains a bis-dienophile as a crosslinker.

The document US-A-4 330 017 discloses a composite tube in which an inner layer is formed by extrusion and an outer tube is formed by extrusion so as to intimately cover a fist tube. This document does not disclose or address to extrude an EPDM tubular element covalently bound to a halo-butyl tubular element. Moreover, this document doe not disclose or address to perform a first and second coating steps of braiding a cotton material and braiding a metal material on the tubular elements.

### SUMMARY OF THE INVENTION

Accordingly, the aim of the present invention is to provide such a coupling pipe for thermohydraulic system which is provided with good physical-mechanical and ageing properties of a EPDM pipe, as well as with the chemical characteristics of a pipe made of a halo-butyl material.

Within the scope of the above mentioned aim, a main object of the present invention is to provide such a pipe which has both the properties of the EPDM rubber pipes and those of the pipes made of halo-butyl materials, in particular their tightness to gases.

The above aim and objects, as well as yet other objects, are achieved by the present invention providing a pipe and method for making it according to claims 1 and 9 respectively.

The invention provides the following advantages with respect to the prior art status.

The pipe of the invention provides very good sealing properties for oxygen, thereby preventing the system from being undesirably oxidated.

Moreover, the inventive pipe preserves all of the physical and mechanical properties of the flexible rubber pipes.

Thus, the inventive pipe can be assimilated to a single extruded pipe element having a metal coating, which can be easily installed in thermohydraulic system, heating system, conditioning system and the like.

### BRIEF DESCRIPTION OF THE DRAWINGS

Further advantages and characteristics of the present invention will become more apparent from the following disclosure, given by way of an illustrative but not limitative example, with reference to the accompanying drawings, where:
Figure 1 is a side view of the pipe specifically designed for thermohydraulic systems according to the present invention;
Figure 2 is a further side view of a detail of the pipe according to the invention, clearly showing the inner construction of said pipe, according to a first embodiment of the invention;

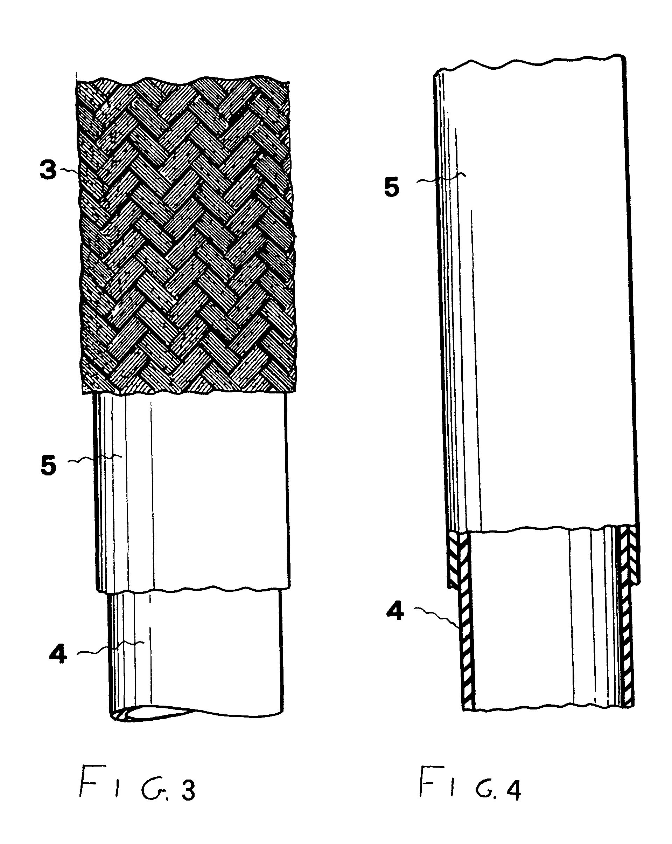

Figure 3 is a further side view of a further detail of the pipe according to the invention, clearly showing the inner construction thereof, according to a modified embodiment of the invention; and
Figure 4 is a further side view of a further detail of the pipe according to the invention, clearly showing the coupling of the two elastomeric tubular layers of said pipe.

### DESCRIPTION OF THE PREFERRED EMBODIMENTS

In the following disclosure reference will be made to some preferred embodiments of the present invention, which have been illustrated by way of a not limitative example of several possible variations of the invention.

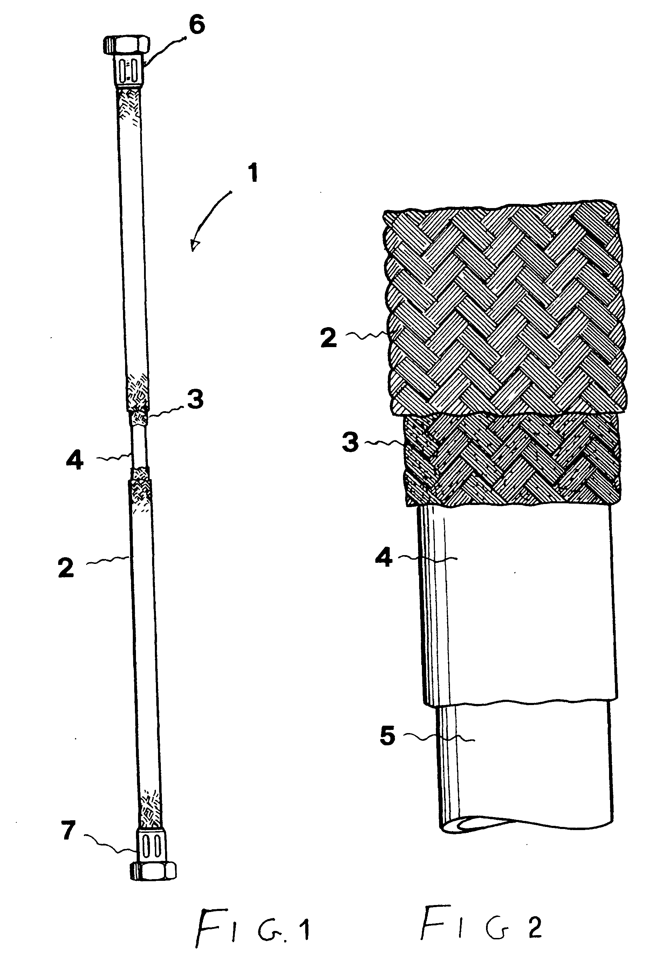

Figure 1 shows the pipe specifically designed for application in thermohydraulic systems, for example heating and conditioning systems, according to the present invention, which has been generally indicated by the reference number 1 and is provided, at the end portions thereof, with pipe fittings 6 and 7.

The pipe 1, as shown, comprises and outer braided coating layer 2, made of a stainless steel material and, inside said outer layer, an inner braided coating layer 3 made of a cotton material being further provided.

Inside the braided coating layer 3, the pipe 1 comprises a first and second tubular layers, respectively indicated by the reference numbers 4 and 5.

More specifically, the first tubular layer 4 is made of an EPDM halogenated thermopolymeric material, whereas the second tubular layer 5 is made of a halo-butyl elastomeric composite material.

According to a preferred embodiment of the invention, the first tubular layer 4, made of an EPDM halogenated thermopolymeric material, is arranged inside of the second tubular layer 5 made of a halo-butyl elastomeric material.

According to a modified embodiment of the present invention, the first tubular layer 4 is arranged outside of the second tubular layer 5.

In particular, the first tubular layer 4 has the following indicative composition: 29.5% elastomeric material, 16% plasticizing material, 34% carbon black, 19& mineral fillings, 1.5% crosslinking or curing agents.

This layer has very good hardness, breaking, elongation, wearing, compression set, atmospheric agent ageing, cold and hot water resistance, as well as diluted acid and base resistance properties.

The second elastomeric tubular layer 5 has the following indicative composition: 43% elastomeric material, 18% plasticizing material, 23% carbon black, 14.5% mineral fillings, 1.5% crosslinking or curing agents.

Moreover, said second elastomeric layer 5 comprises moreover at least 1% bromine.

The second layer, as stated, is a halo-butyl elastomeric composite material, providing the pipe with very good oxygen sealing or tightness properties.

In this connection it should be apparent that both materials used for forming the pipe do not contain any anti-flaming or anti-firing agents.

A perfect binding of the two layers is obtained by a covalent chemical binding, formed with the bromine (Br) component which is present both in the first and in the second tubular layers 4 and 5.

Thus, the pipe is very homogeneous and devoid of any binding failures of the two layers which would be susceptible to generate air pockets.

Moreover, the AISI 304 stainless steel coating provides the pipe with a very good abrasion, hydraulic pressure resistance as well as with a very good flexibility.

The inventive pipe 1, depending on the mutual positions of the two tubular layers 4 and 5, which can be respectively arranged one on the outside of the other or one inside the other, can be made according to two variations of the following making method.

In the case in which the first tubular layer is arranged inside the second tubular layer 5, as shown in Figure 4, the method will comprise the following operating steps.

The EPDM halogenated mixture is extruded in order to provide the innermost tubular layer, indicated by the reference number 4 in Figure 4.

By a drawing operation, under controlled temperature and speed conditions, the tubular layer 4 will be brought to any desired mechanical property arrangement.

A conveyor belt will convey the extruded material through a curing or crosslinking oven, of the melt salt type, under controlled temperature and time conditions, thereby allowing the elastomeric material to properly cure, and providing the cured product with the above disclosed mechanical properties.

The extruded material will be then brought to a curing and washing vat or tank.

The size features of the article of manufacture will be continuously monitored by a laser control equipment, which can control the process according to any suitable fed back procedure.

Then, the pipe will be rolled up to form suitable size rolls and conveyed to following processing steps.

Then, a concentrical extruding step will be performed on the mixture of the pipe 4, by a following drawing equipment, operating under temperature and speed controlled conditions, thereby providing the pipe 1 including the two tubular layers 4 and 5.

Owing to the specifically designed temperature, pressure and chemical binding conditions used in the making method, the two layers will be perfectly bound to one another.

Upon and anti-adhesive process, the pipe will be packaged into rolls, and sent to following possible processing steps.

In particular, the first coating is performed by braiding a cotton material 3, while controlling the number, diameter and tension of the threads, as well as the braiding angle and pitch.

The thus coated pipe will be then cured in an autoclave under controlled temperature and time conditions.

As a following processing step of the method, the pipe will be coated by a metal braid 2, using stainless steel threads or wires, and controlling the number, diameter and tension of the wires, as well as the braiding angle and pitch.

As a last processing step, cutting operations will be performed and fittings will be assembled in order to allow the formed pipe 1 to be easily installed in the system provided for its application.

On the contrary, in the case in which the first tubular EPDM layer 4 is arranged outside, of the second elastomeric tubular layer 5, as shown in Figure 2, the operating steps will be as follows.

The two elastomeric materials are coextruded by an extruding die, under controlled temperature and speed or rate conditions, thereby providing a pipe 1 having any desired size.

Thus, the pipe will be simultaneously provided with an inner layer formed of the halo-butyl polymeric material and an outer layer formed by an EPDM halogenated material.

A conveyor belt will convey the extruded pipe to a curing oven, preferably of the air circulating type, under controlled temperature and time conditions, thereby providing a cured pipe having the above disclosed desired physical-mechanical properties.

The extruded pipe will be then sent to a cooling vat or tank.

In this operation, the size of the pipe will be continuously monitored by any suitable monitoring equipment, i.e. a laser control equipment, which can operate according to any known feedback procedure.

Then, the pipe 1 will be packaged into rolls and sent to possible following processing steps.

As a following processing step of the method, the pipe will be provided with a metal braid 2 made of stainless steel wires, while controlling the number, diameter and tension of the wires, as well as the braiding angle and pitch.

As a last processing step, the pipe will be cut to any desired length, and fittings 6 and 7 will be assembled for allowing the finished pipe to be easily installed.

From the above disclosure it should be apparent that the invention fully achieves the intended aim and objects.

## Claims

1. A coupling pipe (1) for vater heating and/or conditioning systems, of a type including one or more braided coating layers (2, 3) and inside said braided coating layers (2, 3), a first and second tubular layers (4, 5), said first tubular layer (4) being made of an EPDM halogenated thermopolymeric material and said second tubular layer (5) being made of a halo-butyl elastomeric composite material, **characterized in that** said first (4) and second (5) tubular layers are bound to one another by a covalent chemical binding, thereby providing a coupling pipe devoid of any binding failures of said first and second tubular layers susceptible to generate air pockets.

2. A coupling pipe according to Claim 1, **characterized in that** said first tubular layer (4) is arranged inside of and adjoins said second tubular layer (5).

3. A coupling pipe according to Claim 1, **characterized in that** said first tubular layer (4) is arranged outside of and adjoins said second tubular layer (5).

4. A coupling pipe according to one or more of the preceding claims, **characterized in that** said first tubular layer (4) has the following composition: 29.5% elastomeric material, 16% plasticizing material, 34% carbon black, 19% filling materials, 1.5% crosslinking materials.

5. A coupling pipe according to one or more of the preceding claims, **characterized in that** said second tubular layer (5) has the following composition: 43% elastomeric material, 18% plasticizing material, 23% carbon black, 14.5% mineral fillings, 1.5% crosslinking materials.

6. A coupling pipe according to Claim 5, **characterized in that** said second tubular layer (5) further comprises at least 1% bromine.

7. A coupling pipe according to one or more of the preceding claims, **characterized in that** said pipe (1) comprises moreover, outside said tubular layers, a first braided layer made of a cotton braided material.

8. A coupling pipe according to one or more of the preceding claims, **characterized in that** said pipe (1) comprises moreover, outside of said tubular layers (4, 5), a second braided coating layer (6) made of a metal braided material.

9. A method for making a coupling pipe for water heating and/or conditioning systems, according to claim 1, said method being **characterized in that** it comprises at least the following steps: extruding an EPDM halogenated mixture to provide an EPDM tubular extruded element, curing the extruded EPDM tubular element, cooling and washing in a vat the EPDM extruded element, and concentrically extruding, directly against said EPDM extruded product, a halo-butyl mixture to provide an EPDM tubular element-halo-butyl tubular element assembly in which said EPDM tubular element and halo-butyl tubular element are covalently bound to one another, said method further comprising a first and second braiding steps of braiding a cotton material and a metal material on said covalently bound tubular element assembly.

10. A method according to Claim 9,
**characterized in that** said EPDM halogenated mixture extruding step provides to use an extruding die operating under controlled temperature and rate conditions, for providing an inner tubular layer having set mechanical dimensions.

11. A method according to Claim 9 or 10, **characterized in that** said concentrical extruding step of said halo-butyl mixture on said EPDM-halogenated material tubular element is carried by a further extruding die operating under controlled temperature and rate conditions.

12. A method according to Claims 9 to 11, **characterized in that** said curing step is carried out in molten salts and under temperature and time controlled conditions to allow said elastomeric material to properly crosslink.

13. A method according to Claim 9, **characterized in that** said method comprises at least the following steps: coextruding two elastomeric materials, respectively an EPDM halogenated material and a halo-butyl material to provide a first inner tubular element made of a halo-butyl material and a second adjoining outer tubular element made of an EPDM halogenated material, curing the thus obtained tubular element assembly in an air oven under controlled temperature and time conditions to allow the elastomeric material to cure, cooling in a cooling vat the extruded product, and subjecting said extruded product to a first and second braiding steps by braiding a cotton material layer and an adjoining metal material.

14. A method according to Claim 13, **characterized in that** said coextruding step is carried out by an extruding die operating under controlled temperature and rate conditions, to provide an extruded pipe having any set mechanical dimension.

15. A method according to one or more of Claims 9 to 14, **characterized in that** in one or more of said steps, the size of said pipe is continuously monitored by a laser monitoring apparatus, operating on a feedback procedure.

16. A method according to one or more of Claims 9 to 15, **characterized in that** in one or more of said coating braiding steps, the number, diameter, tension of the braiding threads and/or wires, as well as the braiding angle and pitch are continuously monitored.

17. A method according to one or more of Claims 9 to 16, **characterized in that**, following said first coating braiding step, said pipe is cured in an autoclave, under controlled temperature and time conditions.

## Patentansprüche

1. Verbindungsrohr (1) für Heizwasser- und/oder Klimasysteme von einem Typ mit einer oder mehreren Flechtüberzugsschichten (2, 3), wobei im Inneren der Flechtüberzugsschichten (2, 3) eine erste und eine zweite röhrenförmige Schicht (4, 5) angeordnet ist, wobei die erste röhrenförmige Schicht (4) aus einem halogenierten thermopolymerischen EPDM-Material und die zweite röhrenförmige Schicht (5) aus einem Halo-Butyl-Elastomer-Verbundmaterial besteht, **dadurch gekennzeichnet, dass** die erste (4) und die zweite (5) röhrenförmige Schicht durch eine kovalente chemische Bindung miteinander verbunden sind, wodurch ein Verbindungsrohr ohne Bindungsausfälle zwischen der ersten und der zweiten röhrenförmigen Schicht, die zu Lufttaschen führen könnten, entsteht.

2. Verbindungsrohr nach Anspruch 1, **dadurch gekennzeichnet, dass** die erste röhrenförmige Schicht (4) im Inneren der zweiten röhrenförmigen Schicht (5) angeordnet ist und an die zweite röhrenförmige Schicht (5) angrenzt.

3. Verbindungsrohr nach Anspruch 1, **dadurch gekennzeichnet, dass** die erste röhrenförmige Schicht (4) außerhalb der zweiten röhrenförmigen Schicht (5) angeordnet ist und an die zweite röhrenförmige Schicht (5) angrenzt.

4. Verbindungsrohr nach einem oder mehreren der vorangehenden Ansprüche, **dadurch gekennzeichnet, dass** die erste röhrenförmige Schicht (4) folgende Zusammensetzung hat: 29,5 % Elastomermaterial, 16 % Weichmacher, 34 % Ruß, 19 % Füllstoffe und 1,5 % Vernetzer.

5. Verbindungsrohr nach einem oder mehreren der vorangehenden Ansprüche, **dadurch gekennzeichnet, dass** die zweite röhrenförmige Schicht (5) folgende Zusammensetzung hat: 43 % Elastomermaterial, 18 % Weichmacher, 23 % Ruß, 14,5 % mineralische Füllstoffe und 1,5 % Vernetzer.

6. Verbindungsrohr nach Anspruch 5, **dadurch gekennzeichnet, dass** die zweite röhrenförmige Schicht (5) des Weiteren wenigstens 1 % Brom umfasst.

7. Verbindungsrohr nach einem oder mehreren der vorangehenden Ansprüche, **dadurch gekennzeichnet, dass** das Rohr (1) des Weiteren - außerhalb der röhrenförmigen Schichten - eine erste Flechtschicht aus geflochtenem Baumwollmaterial umfasst.

8. Verbindungsrohr nach einem oder mehreren der vorangehenden Ansprüche, **dadurch gekennzeichnet, dass** das Rohr (1) des Weiteren - außerhalb der röhrenförmigen Schichten (4, 5) - eine zweite Flechtüberzugsschicht (6) aus einem geflochtenen metallischen Material umfasst.

9. Verfahren zur Herstellung eines Verbindungsrohres für Heizwasser- und/oder Klimasysteme nach Anspruch 1, wobei das Verfahren **dadurch gekennzeichnet ist, dass** es wenigstens die folgenden Schritte umfasst: Extrudieren einer halogenierten EPDM-Mischung zu einem röhrenförmigen EPDM-Extrusionselement, Aushärten des röhrenförmigen EPDM-Extrusionselements, Abkühlen und Waschen des EPDM-Extrusionselements in einem Bottich und konzentrisches Extrudieren - direkt gegen das EPDM-Extrusionsprodukt - einer Halo-Butyl-Mischung zu einer Baugruppe aus einem röhrenförmigen EPDM-Element und einem röhrenförmigen Halo-Butyl-Element, wobei das röhrenförmige EPDM-Element und das röhrenförmige Halo-Butyl-Element kovalent miteinander verbunden sind, wobei das Verfahren des Weiteren einen ersten und einen zweiten Flechtschritt umfasst, bei denen ein Baumwollmaterial bzw. ein Metallmaterial auf die kovalent verbundene Baugruppe aus röhrenförmigen Elementen geflochten wird.

10. Verfahren nach Anspruch 9, **dadurch gekennzeichnet, dass** der Schritt des Extrudierens der halogenierten EPDM-Mischung die Verwendung eines Extrusionswerkzeugs vorsieht, das unter kontrollierten Temperatur- und Ratenbedingungen arbeitet, um eine innere röhrenförmige Schicht mit festgelegten mechanischen Abmessungen herzustellen.

11. Verfahren nach Anspruch 9 oder 10, **dadurch gekennzeichnet, dass** der Schritt des konzentrischen Extrudierens der Halo-Butyl-Mischung auf dem röhrenförmigen Element aus halogenierten EPDM-Material mittels einer weiteren Extrusionswerkzeug-Operation unter kontrollierten Temperatur- und Ratenbedingungen ausgeführt wird.

12. Verfahren nach den Ansprüchen 9 bis 11, **dadurch gekennzeichnet, dass** der Schritt des Aushärtens in schmelzflüssigen Salzen und unter temperatur- und zeitgesteuerten Bedingungen ausgeführt wird, damit sich das Elastomermaterial richtig vernetzen kann.

13. Verfahren nach Anspruch 9, **dadurch gekennzeichnet, dass** das Verfahren wenigstens die folgenden Schritte umfasst: Koextrudieren zweier Elastomermaterialien, und zwar eines halogenierten EPDM-Materials und eines Halo-Butyl-Materials, zur Herstellung eines ersten inneren röhrenförmigen Elements aus einem Halo-Butyl-Material und eines zweiten, angrenzenden äußeren röhrenförmigen Elements aus einem halogenierten EPDM-Material; Aushärten der so erhaltenen Baugruppe aus röhrenförmigen Elementen in einem Luftofen unter kontrollierten Temperatur- und Zeitbedingungen, so dass das Elastomermaterial aushärten kann; Abkühlen des Extrusionsprodukts in einem Abkühlungsbottich; und Ausführen eines ersten und eines zweiten Flechtschrittes an dem Extrusionsprodukt, mit denen eine Baumwollmaterialschicht bzw. ein angrenzendes Metallmaterial aufgeflochten werden.

14. Verfahren nach Anspruch 13, **dadurch gekennzeichnet, dass** der Koextrusionsschritt mit einem Extrusionswerkzeug ausgeführt wird, das unter kontrollierten Temperatur- und Ratenbedingungen arbeitet, um ein extrudiertes Rohr mit jeglichen festgelegten mechanischen Abmessungen herzustellen.

15. Verfahren nach einem oder mehreren der Ansprüche 9 bis 14, **dadurch gekennzeichnet, dass** bei einem oder mehreren der Schritte die Größe des Rohres kontinuierlich mit einer Laserüberwachungsvorrichtung, die innerhalb eines Rückkopplungskreises arbeitet, überwacht wird.

16. Verfahren nach einem oder mehreren der Ansprüche 9 bis 15, **dadurch gekennzeichnet, dass** bei einem oder mehreren der Flechtüberzugsschritte die Anzahl, der Durchmesser und die Zugspannung der Flechtfäden und/oder -drähte sowie der Flechtwinkel und die Flechtsteigung kontinuierlich überwacht werden.

17. Verfahren nach einem oder mehreren der Ansprüche 9 bis 16, **dadurch gekennzeichnet, dass** im Anschluss an den ersten Flechtüberzugsschritt das Rohr in einem Autoklaven unter kontrollierten Temperatur- und Zeitbedingungen ausgehärtet wird.

## Revendications

1. Tuyau de raccordement (1) pour système d'eau chaude sanitaire et/ou de climatisation d'un type comportant une ou plusieurs couches de revêtement tressées (2, 3) et à l'intérieur de ces couches de revêtement tressées (2, 3), une première et une seconde couches tubulaires (4, 5), ladite première couche tubulaire (4) étant faite d'une matière thermopolymère halogénée EPDM et ladite seconde couche tubulaire (5) étant faite d'une matière composite élastomère au halo-butyle, **caractérisé en ce que** ladite première (4) et ladite seconde (5) couches tubulaires sont liées entre elles par une liaison chimique covalente, ce qui constitue un tuyau de raccordement exempt de toute défaillance de liaison desdites première et seconde couches tubulaires susceptible de produire des poches d'air.

2. Tuyau de raccordement selon la revendication 1, **caractérisé en ce que** ladite première couche tubulaire (4) est agencée à l'intérieur de et est contiguë à ladite seconde couche tubulaire (5).

3. Tuyau de raccordement selon la revendication 1, **caractérisé en ce que** ladite première couche tubulaire (4) est agencée à l'extérieur de et est contiguë à ladite seconde couche tubulaire (5).

4. Tuyau de raccordement selon une ou plusieurs des précédentes revendications, **caractérisé en ce que** ladite première couche tubulaire (4) a la composition suivante : 29,5 % de matière élastomère, 16 % de matière plastifiante, 34 % de noir de carbone, 19 % de matières de charge, 1,5 % de matières de réticulation.

5. Tuyau de raccordement selon une ou plusieurs des précédentes revendications, **caractérisé en ce que** ladite seconde couche tubulaire (5) a la composition suivante : 43 % de matière élastomère, 18 % de matière plastifiante, 23 % de noir de carbone, 14,5 % de matières de charge minérales, 1,5 % de matières de réticulation.

6. Tuyau de raccordement selon la revendication 5, **caractérisé en ce que** ladite seconde couche tubulaire (5) comprend de plus au moins 1 % de brome.

7. Tuyau de raccordement selon une ou plusieurs des précédentes revendications, **caractérisé en ce que** ledit tuyau (1) comprend de plus, à l'extérieur desdites couches tubulaires, une première couche tressée faite d'une matière tressée en coton.

8. Tuyau de raccordement selon une ou plusieurs des précédentes revendications, **caractérisé en ce que** ledit tuyau (1) comprend de plus, à l'extérieur desdites couches tubulaires (4, 5), une seconde couche de revêtement tressée (3) faite d'une matière tressée métallique.

9. Procédé pour faire un tuyau de raccordement pour système d'eau chaude sanitaire et / ou de climatisation, selon la revendication 1, ledit procédé étant **caractérisé en ce qu'**il comprend au moins les étapes suivantes : l'extrusion d'un mélange halogéné EPDM pour constituer un élément extrudé tubulaire EPDM, le durcissement de l'élément tubulaire EPDM extrudé, le refroidissement et le lavage dans un bac de l'élément extrudé EPDM, et l'extrusion concentrique directement contre ledit produit extrudé EPDM d'un mélange d'halo-butyle pour constituer un ensemble d'élément tubulaire EPDM-élément tubulaire d'halo-butyle dans lequel ledit élément tubulaire EPDM et ledit élément tubulaire d'halo-butyle sont liés de façon covalente entre eux, ledit procédé comprenant de plus une première et une seconde étapes de tressage pour tresser une matière en coton et une matière métallique sur ledit ensemble d'éléments tubulaires liés de façon covalente.

10. Procédé selon la revendication 9 **caractérisé en ce que** ladite étape d'extrusion du mélange halogéné EPDM prévoit l'utilisation d'une filière d'extrusion fonctionnant dans des conditions de température et de vitesse contrôlées, pour constituer une couche tubulaire intérieure ayant des dimensions mécaniques déterminées.

11. Procédé selon la revendication 9 ou 10, **caractérisé en ce que** ladite étape d'extrusion concentrique dudit mélange d'halo-butyle sur ledit élément tubulaire de matière halogénée EPDM est réalisée par une autre filière d'extrusion fonctionnant dans des conditions de vitesse et de température contrôlées.

12. Procédé selon les revendications 9 à 11, **caractérisé en ce que** ladite étape de durcissement est réalisée dans des sels en fusion et dans des conditions de température et de durée contrôlées pour permettre à ladite matière élastomère de se réticuler correctement.

13. Procédé selon la revendication 9, **caractérisé en ce que** ledit procédé comprend au moins les étapes suivantes : la coextrusion de deux matières élastomères, respectivement une matière halogénée EPDM et une matière d'halo-butyle pour constituer un premier élément tubulaire intérieur fait d'une matière d'halo-butyle et un second élément tubulaire extérieur contigu fait d'une matière halogénée EPDM, le durcissement de l'ensemble des éléments tubulaires ainsi obtenu dans une étuve à air chaud dans des conditions de température et de durée contrôlées pour permettre à la matière élastomère de durcir, le refroidissement dans un bac de refroidissement du produit extrudé, et le passage dudit produit extrudé à une première et une seconde étapes de tressage en tressant une couche de matière en coton et une matière métallique contiguë.

14. Procédé selon la revendication 13, **caractérisé en ce que** ladite étape de coextrusion est réalisée par une filière d'extrusion fonctionnant dans des conditions de température et de vitesse contrôlées, pour constituer un tuyau extrudé ayant une dimension mécanique déterminée.

15. Procédé selon une ou plusieurs des revendications 9 à 14, **caractérisé en ce que**, dans une ou plusieurs desdites étapes, la dimension dudit tuyau est constamment contrôlée par un appareil de contrôle à laser, fonctionnant selon une procédure de rétroaction.

16. Procédé selon une ou plusieurs des revendications 9 à 15, **caractérisé en ce que**, dans une ou plusieurs desdites étapes de tressage de revêtement, le nombre, le diamètre, la tension des fils textiles et/ou fils métalliques de tressage, ainsi que l'angle et le pas de tressage sont constamment contrôlés.

17. Procédé selon une ou plusieurs des revendications 9 à 16, **caractérisé en ce que**, après ladite première étape de tressage de revêtement, ledit tuyau est durci dans un autoclave, dans des conditions de température et de durée contrôlées.
